# EUROPEAN PATENT SPECIFICATION

(11) **EP 4 415 912 B1**
(45) Date of publication and mention of the grant of the patent: **17.12.2025**
(21) Application number: 22800761.3
(22) Date of filing: 10.10.2022
(51) Int. Cl.: B23D 25/12, B23D 35/00

(54) **CUTTING DEVICE FOR CUTTING FLAT METAL PRODUCTS AND CUTTING SHEAR FOR CUTTING SAID FLAT METAL PRODUCTS EQUIPPED WITH SAID DEVICE**
SCHNEIDVORRICHTUNG ZUM SCHNEIDEN VON METALLFLACHPRODUKTEN UND SCHNEIDSCHERE ZUM SCHNEIDEN DIESER METALLFLACHPRODUKTE MIT DIESER VORRICHTUNG
DISPOSITIF DE COUPE POUR COUPER DES PRODUITS MÉTALLIQUES PLATS ET CISAILLE DE COUPE POUR COUPER LESDITS PRODUITS MÉTALLIQUES PLATS ÉQUIPÉE DUDIT DISPOSITIF

(30) Priority: 11.10.2021 IT 202100025979
(43) Date of publication of application: 21.08.2024
(73) Proprietor: DANIELI & C. OFFICINE MECCANICHE S.P.A., 33042 Buttrio (UD) (IT)
(72) Inventor: LAPIN, Dmytro, 33044 Manzano (IT); BULFONE, Matteo Remy, 33010 Colloredo (IT)
(74) Representative: Celona, Antonio
(86) International application number: PCT/IB2022/059693
(87) International publication number: WO 2023/062506

(56) References cited:
- EP-B1- 3 237 136
- DE-A1- 1 627 315
- DE-A1- 10 054 749
- US-A- 5 904 086

## Description

### TECHNICAL FIELD OF THE INVENTION

The present invention relates to the field of iron and steel industry; in particular, the present invention relates to the field of cutting flat metal products made, for example, by rolling and/or advanced by unwinding a previously rolled coil. In detail, the present invention relates to a cutting device for cutting said flat metal products during their advancement along a direction substantially parallel to their direction of longitudinal extension, said device comprising a rotating drum delimited by a cylindrical surface and equipped with a cutting blade or knife protruding from said cylindrical surface, wherein the rotation of said drum results in the impact of said blade or knife against said flat metal product and thus ultimately in the cutting of a said flat metal product transversely relative to its direction of advancement. The present invention relates, in particular, to a said cutting device comprising an innovative solution for adjusting the position of the blade, or knife, transversely to its direction of extension and thus tangentially to the drum.

It is a further object of the present invention a shear comprising at least one cutting device of the aforesaid type, wherein it is a further object of the present invention a method for cutting flat metal products transversely to their direction of advancement.

### BACKGROUND ART

EP 3 237 136 B1 discloses an example of a drum cutting device in accordance with the preamble of claim 1.

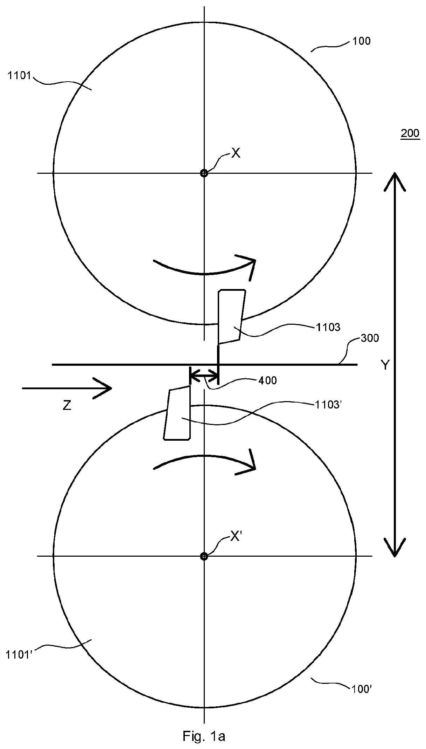

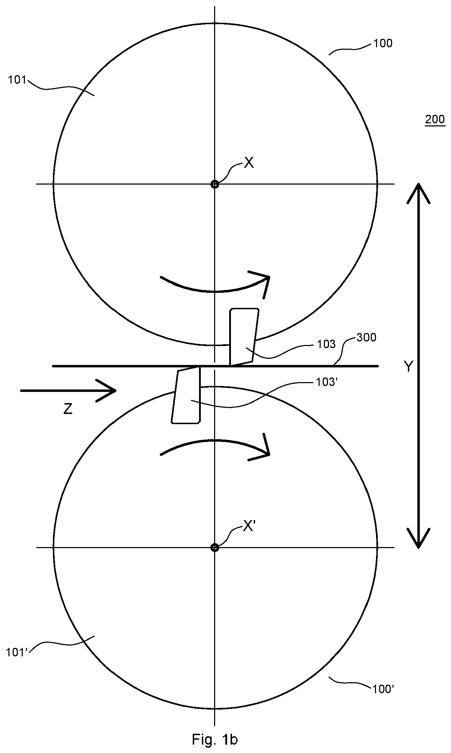

It is known in the prior art the use of rotating drum shears for cutting flat metal products advancing along a direction of advancement substantially parallel to the direction of longitudinal extension of said products, said shears being adapted to cut said flat metal products transversely relative to their direction of advancement. An example of a shear of a known type is shown in figures 1a and 1b and comprises, as shown, a first rotating drum 1101 and a second rotating drum 1101' adapted to be set into rotation each relative to own longitudinal axis of symmetry X and X' respectively, in particular in opposite directions of rotation. Again, as shown, said first drum 1101 and second drum 1101' are equipped with a blade or knife 1103 and 1103', respectively, each of which protrudes from the cylindrical surface which radially delimits the drum to which it belongs, wherein the blade 1103 thus radially protrudes from the drum 1101, while the blade 1103' radially protrudes from the drum 1101'.

Said first drum 1101 and second drum 1101' (at least one of them) are translatable along a direction Y perpendicular to the rotation axes X and X' between a first "open" position (figure 1a), in which the distance between the rotation axes X and X' is maximum, and a "closed" position (figure 1b), in which the distance between the rotation axes X and X' is minimum.

In figures 1a and 1b, reference numeral 300 identifies a flat metal product, e.g., a strip of a predefined thickness (along the axis Y) and width (along the axes X and X' and thus perpendicular to the plane of the figures), said strip coming, for example, from a rolling mill stand (not shown) or from the unwinding of a coil (not shown) and being advanced along the direction Z and thus parallel to its longitudinal extension direction (perpendicular to its width).

For cutting the strip 300 into portions of a predefined length, the end of the strip 300 is introduced into the space between the drum 1101 and the drum 1101' in the open position, wherein the drums 1101 and 1101' are then set into mutual rotation, approached, and positioned in the closed position (figure 1b), wherein the strip 300 is finally advanced along the direction Z. The strip 300 is run between the drums 1101 and 1101' with linear speed synchronized with the peripheral speeds of the knives 1103 and 1103' of the drums 1101 and 1101', respectively, which approach each other by virtue of eccentric means, which allow the cutting before moving away mutually the two drums 1101 and 1101' and the respective knives 1103 and 1103' again from the transiting product 300.

Obviously, the rotation of the drums 1101 and 1101' results in an impact, from above and from below, respectively, of the blades 1103 and 1103' against the strip 300 and thus in the cutting of the strip 300 into portions.

In shears of the type described here with reference to figures 1a and 1b, the need to cut strips 300 of different thicknesses results in the need to adjust the gap or distance 400 (in the direction Z) between the blade 1103 and the blade 1103', wherein the gap 400 must be either increased or decreased to cut the strips 300 either thicker or thinner, respectively.

For this purpose, various solutions have been suggested and are still used in the shears according to the prior art, wherein said known solutions, however, display problems and/or disadvantages that the owner of the present patent application intended to overcome or at least minimize by means of the invention described and claimed below.

Indeed, the solutions according to the prior art for adjusting the gap between the blades are prevalently of the mechanical type and thus difficult to implement and prone to failure and/or breakage.

Furthermore, the solutions of the known type for adjusting the gap 400 require the shear be set in a stopped state, wherein gap adjustment times (and thus shear stop times) are often incompatible with production needs because they usually require manual intervention.

Finally, the disadvantages of the solutions of the known type include the fact that they do not allow the gap 400 to be adjusted with the necessary precision, having a limited adjustment range, and do not guarantee that the gap 400 as it is set will be maintained (does not change unintentionally) for all the planned production cycles, wherein, on the contrary, an adjustment of the desired and/or required gap is often required during the process.

Therefore, it is the main purpose of the present invention to overcome or at least minimize the problems summarized above and encountered in the prior art with an automatic or at least semiautomatic gap adjustment, in particular by having the shear in-line, and thus avoiding manual intervention.

In particular, it is a first purpose of the present invention to make available a solution for adjusting the gap between the blades of an opposed rotary drum shear which is implementable at low cost and through simple and fast operations on shear drums of various types and sizes.

It is a second purpose or objective of the present invention also to make available a solution of the aforesaid type which allows the gap to be adjusted in times compatible with production requirements.

Finally, it is a further non-secondary purpose of the present invention to make available a solution for adjusting the gap between the blades of an opposed rotary drum shear which guarantees a precise and long-lasting adjustment of said gap, and thus does not require in-process readjustments of the gap as previously set and adjusted.

### DESCRIPTION OF THE PRESENT INVENTION

The present invention is based on a concept according to which the drawbacks found in the prior art and summarized above can be effectively overcome or at least minimized by means of hydraulic, rather than mechanical, means of gap adjustment. As set out below, the general concept mentioned above provides a very simple conformation of the gap adjustment means, wherein the implementation of said hydraulic-type adjustment means thus is particularly simplified and straightforward. In view of the above, as well as of the problems and/or drawbacks encountered in the opposed rotating drum shears according to the prior art, the present invention relates to a cutting device according to claim 1, a cutting method according to claim 10, and an opposed rotating drum shear according to claim 12, wherein further embodiments of device, of the method and of the shear according to the present invention are defined by the dependent claims.

According to a first embodiment of the invention, a drum cutting device, e.g., for shears adapted to cut flat metal products advancing along a direction substantially parallel to their direction of longitudinal extension, said device being adapted to cut said flat metal products transversely relative to their direction of advancement, comprises at least one drum adapted to be rotated and diametrically delimited by a cylindrical surface and containing a blade or knife which partially protrudes from said cylindrical surface, wherein said blade or knife is partially housed in a seat of said drum and extends longitudinally along a direction substantially parallel to the rotation axis X of said drum, wherein said device comprises an adjustment wedge also housed at least partially in said seat of said drum, wherein the direction of extension of said wedge is substantially parallel to the rotation axis X of said drum and the thickness of said wedge transversely to its direction of extension varies continuously along said direction of extension from a minimum thickness to a maximum thickness, wherein said wedge is positioned relative to said blade or knife so that the translation of said wedge parallel to its direction of extension in a first direction of translation results in a peripheral tangential translation, in particular in a peripheral circumferential translation, of said blade or knife in a first direction of peripheral tangential translation TP1, in particular in a first direction of peripheral circumferential translation, while the translation of said wedge in a second direction of translation opposite to the first one results in the peripheral tangential translation, in particular in a peripheral circumferential translation, of said blade or knife in a second direction of peripheral tangential translation TP2, in particular in a second direction of peripheral circumferential translation, opposite to the first one, said device comprising translation means for the translation of said wedge in said two opposite directions of translation, wherein said translation means are arranged aboard said drum, and are of the hydraulically actuated type and adapted to subject the opposite ends of said wedge to the pressure of a hydraulic fluid.

Preferably, said translation means of the hydraulically actuated type are arranged inside, preferably completely inside, the drum.

In a variant, said translation means comprise a hydraulic circuit comprising, in turn, a first chamber and a second chamber positioned at a first end and a second end, respectively, of said adjustment wedge, wherein the introduction of a pressurized hydraulic fluid into said first chamber or said second chamber thus results in the translation of said wedge in said first direction of translation or said second direction of translation, respectively.

In a further variant, said device comprises a first thrust element and a second thrust element housed in said first chamber and said second chamber, respectively, so that the introduction of said pressurized hydraulic fluid into said first chamber or said second chamber results respectively in the translation of said first thrust element or said second thrust element and thus respectively in a thrust against said first end of said wedge by said first thrust element in said first direction of translation or in a thrust against said second end of said wedge by said second thrust element in said second direction of translation.

In a variant, said first and second chambers are placed in communication with the outside of said device respectively by means of a first hydraulic duct and a second hydraulic duct obtained at least partially inside said drum, and wherein said first hydraulic duct and said second hydraulic duct thus lead respectively into a first hydraulic port and a second hydraulic port accessible from the outside of said drum for the introduction of a pressurized hydraulic fluid respectively into said first chamber and said second chamber and for the discharge of said hydraulic fluid respectively from said first chamber and said second chamber.

In a further variant of said first hydraulic port and second hydraulic port are positioned on a rotating joint adapted to support rotating parts of said device.

In a variant, said first and second chambers are placed in communication with the outside of said device also respectively by means of a third hydraulic duct and a fourth hydraulic duct obtained at least partially inside said drum, wherein thus said third hydraulic duct and said fourth hydraulic duct lead respectively into a third hydraulic port and a fourth hydraulic port accessible from the outside of said drum for the introduction of a pressurized hydraulic fluid respectively into said first chamber and said second chamber and for the discharge of said hydraulic fluid respectively from said first chamber and said second chamber.

In a further variant, said third hydraulic port and fourth hydraulic port are positioned on a rotating part of the hub of said device different from said rotating joint.

Preferably, said device comprises an indicator of the position of said wedge inside the drum.

According to a first embodiment, a method for cutting flat metal products advancing along a direction substantially parallel to their direction of longitudinal extension is performed by a device by means of which said flat metal products are cut transversely relative to their direction of advancement, wherein said device is a device according to any one of the embodiments of the present invention, thus wherein the rotation of said at least one drum results in the impact of said blade or knife against a said flat metal product and thus ultimately in the cutting of said a flat metal product transversely to its direction of advancement, and wherein the translation of said wedge in said two opposite directions of translation is achieved by means of said hydraulic type translation means arranged aboard said drum.

In a variant, the translation of said wedge in said two opposite directions of translation is achieved by introducing a pressurized hydraulic fluid into said first chamber and/or respectively said second chamber.

According to a first embodiment, a drum shear for cutting flat metal products advancing along a direction substantially parallel to their direction of longitudinal extension, said shear being adapted to cut said products transversely relative to their direction of advancement, comprises a first cutting device and a second cutting device comprising respectively a first drum and a second drum, diametrically delimited respectively by a first cylindrical surface and a second cylindrical surface, and a first blade or knife and a second blade or knife fixed respectively to said first drum and to said second drum and protruding respectively from said first drum and from said second drum, wherein said first device and second device are reciprocally positioned to define a space for the passage of said flat metal products during their advancement, wherein with said first device and said second device appropriately positioned, the rotation of said first drum and said second drum results in the cutting of said flat metal product by means of the substantially simultaneous action of said first blade and said second blade; wherein said first device is a device according to any one of the embodiments of the present invention.

In a variant of the shear, at least one of said first device and second device is translatable along a direction of translation Y perpendicular to the rotation axis X of the respective first drum or away from and towards said second device.

In a further variant of the shear, the gap between the said first knife and second knife is adjustable to be equal to or greater than 0.00 mm, so that even very thin strips (e.g., 0.8mm) can be cut.

### BRIEF DESCRIPTION OF THE DRAWINGS

Hereafter, the present invention will be further clarified by means of the following detailed description of the possible embodiments depicted in the drawings, in which corresponding or equivalent features and/or component parts of the present invention are identified by the same reference numerals. It must be noted that the present invention is not limited to the embodiments described hereafter and shown on the accompanying drawings.

In the drawings:
Figures 1a and 1b each show a side view of an opposed rotating drum shear according to prior art;
Figures 1c and 2a show side views of a shear according to an embodiment and a respective rotating drum cutting device according to an embodiment;
Figure 2b, 3a and 3b each shows a perspective view of a rotating drum cutting device according to an embodiment;
Figures 4a and 4b show a side view and an enlargement of a cutting device according to an embodiment, respectively;
Figures 5a and 5b show a side view and an enlargement of a cutting device according to an embodiment, respectively.

### DETAILED DESCRIPTION OF THE PRESENT INVENTION

The present invention is particularly applied in the field of cutting of flat metal products, e.g., metal strips of various thicknesses, this being the reason for which the present invention is described hereafter with particular reference to its applications in the field of systems of the aforesaid type.

However, it is worth specifying that the possible applications of the present invention are not limited to those described below. Conversely, the present invention is conveniently applied in all cases in which it is necessary to cut an elongated metal (but possibly also plastic) element into portions of less than its total length.

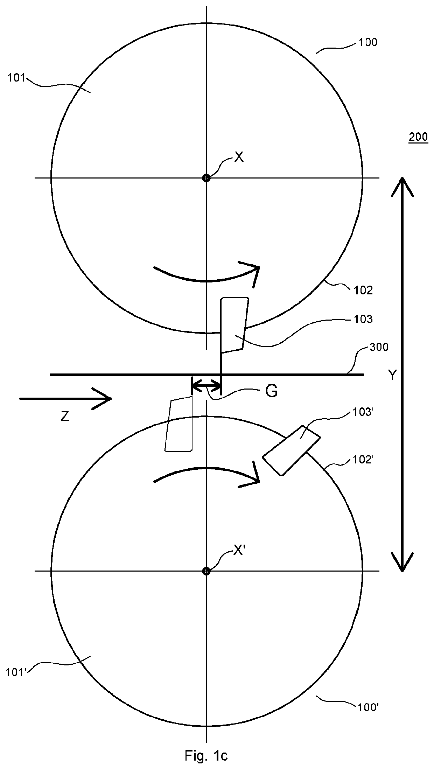

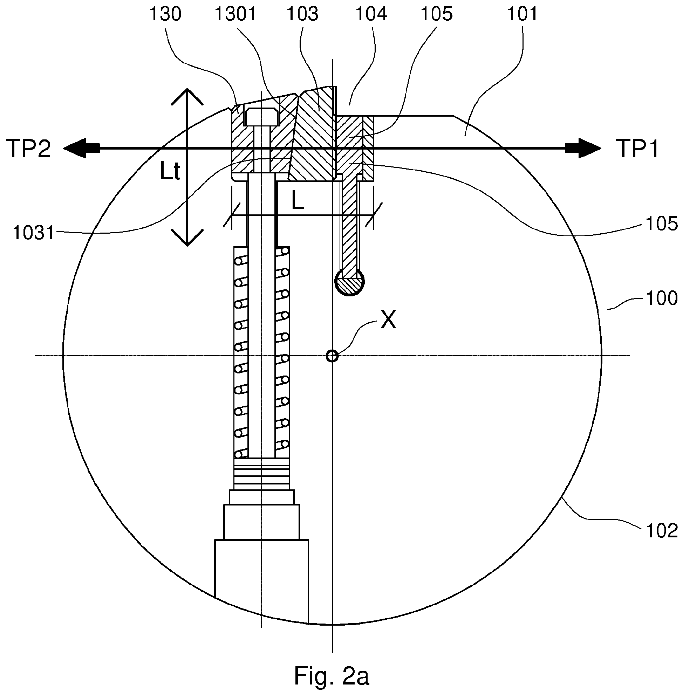

According to the embodiment shown in figures 1c and 2a, a shear 200 of the present invention comprises a first drum 101 and a second drum 101' equipped with a first knife 103 and a second knife 103', respectively, which protrude from the cylindrical surface 102 of the first drum 101 and from the cylindrical surface 102' of the second drum 101', respectively, in a manner known and thus not described in detail for the sake of brevity. However, for the sake of completeness of exposition it is clarified that for the purposes of the present invention it is sufficient for the cutting edge of the first knife 103 and the second knife 103' to protrude radially from the surface 102 and the surface 102', respectively.

The reciprocal position of the drums 101 and 101' is adjustable along the direction Y between an open position (figure 1c) and a closed position (not shown) in the manner substantially described above, wherein the drums 101 and 101' are adapted to be set in rotation relative to their respective longitudinal axes X and X', respectively.

The cutting device 100 according to the embodiment in figure 2a comprises the first drum 101 and comprises as shown a blade or knife 103, which partially protrudes, in particular the cutting edge of which partially protrudes, in a radial direction from the cylindrical surface 102, which radially delimits the drum 101, wherein said blade or knife 103 is partially housed in a seat 104 of said drum 101 and extends longitudinally along a direction substantially parallel to the rotation axis X of the drum 101.

The seat 104 extends (figure 2a) in a first direction radially from the surface 102 towards the inside of the drum 101, in a second direction parallel to axis X, and in a third direction has a width L such to accommodate not only the blade 103 but also a wedge 105 and a locking element 130 arranged on opposite sides of the wedge 105 in the direction of the width L, wherein both the wedge 105 and the locking element 130 have longitudinal extension parallel to the axis X and thus to the longitudinal extension of the seat 104.

The locking element 130 has an inclined surface 1301 placed against an inclined surface 1031 of the knife 103 parallel to the surface 1301, wherein the locking element 130, by means not shown and not within the scope of the present invention (and thus not described in detail for the sake of brevity), is translatable along a direction Lt transverse to the direction of the width L of the seat 104, the element 130 being translatable in the two opposite directions of translation as indicated by the double arrow in figure 2a. From the description and from simple observation of figure 2a, it can be seen that the upward translation of the element 130 relative to the figure, and thus towards the outside of the seat 104, results in a decrease in the thrust of the surface 1301 against the surface 1031, and thus in a decrease in the pressure of the blade 103 against the wedge 105, and thus ultimately in the unlocking of the blade 103 and the possibility of adjusting the position of the blade within the seat 104 in the manner described below. Conversely, the downward translation of the element 130 relative to the figure, and thus towards the inside of the seat 104, results in an increase in the thrust of the surface 1301 against the surface 1031, and thus in an increase in the pressure of the blade 103 against the wedge 105, and thus ultimately in the locking of the blade 103 in its predetermined position.

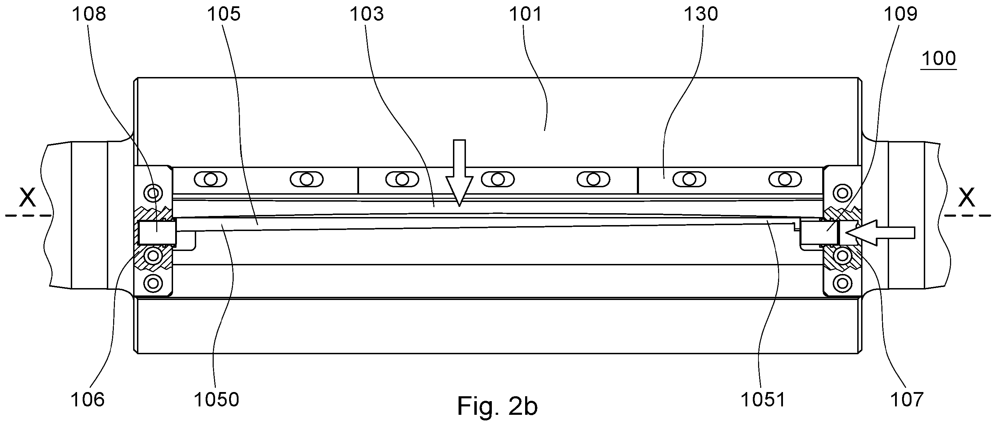

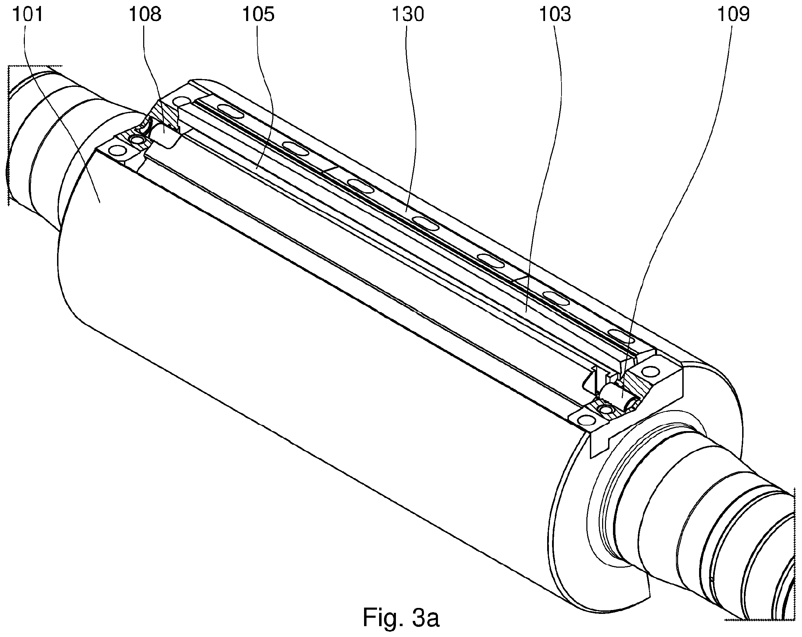

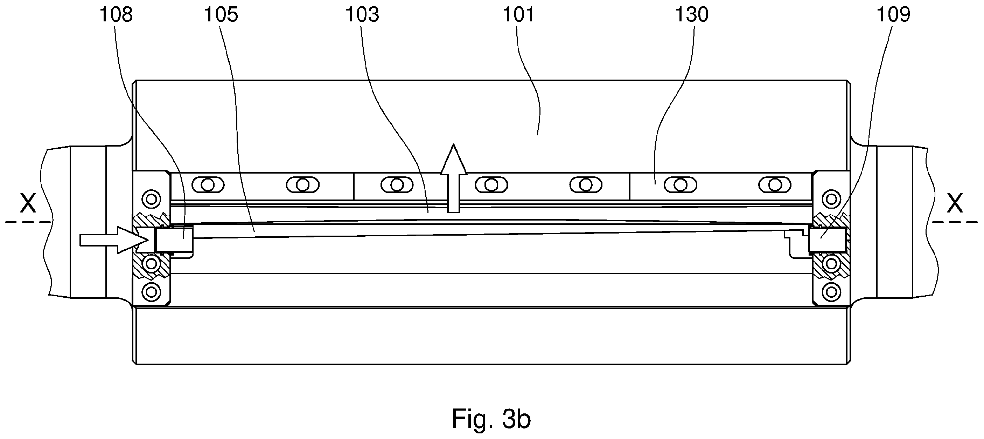

The manners of adjusting the tangential or circumferential position of the blade 103 inside the seat 104 are described below with reference to figures 2b, 3a and 3b.

First of all, it must be noted that the thickness of the adjustment wedge 105 transverse to its direction of extension varies continuously along said direction of extension from a minimum thickness to a maximum thickness (refer for this purpose, for example, to figure 3b, which shows the wedge 105 with greater thickness on the left of the figure and smaller thickness on the right of the figure). It can thus be inferred that, with the element 130 in the unlocking position, and thus with the knife 103 free to be translated, the translation of said wedge 105 parallel to its direction of extension in a first direction of translation from the right leftwards (with reference to Figure 2b) results in a peripheral tangential translation, in particular in a peripheral circumferential translation, or at least in the possibility of translating the blade or knife 103 (e.g., by retracting the element 130 into a locking position) in a first direction of peripheral tangential translation TP1, in particular in a first direction of peripheral circumferential translation, and thus in a decrease of the gap G; on the contrary, the translation of said wedge 105 in a second direction of translation, opposite to the first one, from the left rightwards (with reference to Figure 3b) results in the peripheral tangential translation, in particular in a peripheral circumferential translation, of said blade or knife 103 in a second direction of peripheral tangential translation TP2, in particular in a second direction of peripheral circumferential translation, opposite to the first direction, and thus in the increase of the gap G, wherein the re-entry of the block 130 towards the inside of the seat 104 and up to assume the new locking position (with contrast between surfaces 1301 and 1031) results in the locking of the blade 103 in the position defined by the wedge 105.

The device 100 according to the embodiment shown comprises translation means for the translation of said wedge 105 in said two opposite directions of translation, wherein a first important peculiarity of the device 100 is that said translation means are arranged aboard said drum 101.

Furthermore, a second peculiarity of the device 100 relates to the fact that said translation means are of the hydraulically actuated type and adapted to subject the opposite ends of said wedge 105 to the pressure of a hydraulic fluid.

Preferably, said hydraulic-type translation means are arranged inside, preferably completely inside, the drum 101.

In a variant, said translation means comprise a hydraulic circuit (not fully shown because it is partially formed inside said drum 101), said hydraulic circuit comprising, in turn, a first chamber 106 and a second chamber 107 in communication with said hydraulic circuit and positioned at a first end 1050 and a second end 1051, respectively, of said adjustment wedge 105, wherein thus the introduction of a pressurized hydraulic fluid into said first chamber 106 or said second chamber 107 results in the translation of said wedge 105 in said first direction of translation or said second direction of translation, respectively.

As clearly shown in Figures 2b and 3b, the first chamber 106 and the second chamber 107 are arranged inside the drum 101.

Furthermore, in order to improve the thrust by the oil or hydraulic fluid against the ends 1050 and 1051 of the wedge 105, a first movable thrust element 108 and a second movable thrust element 109, e.g., both substantially cylinder-shaped, are preferably respectively housed in the chambers or cavities 106 and 107, wherein the introduction of said pressurized hydraulic fluid into said first chamber 106 or said second chamber 107 (also, for example, substantially cylinder-shaped) results in translating said first thrust element 108 or said second thrust element 109, respectively, and thus in a thrust against said first end 1050 of said wedge 105 by said first thrust element 108 in said first direction of translation or in a thrust against said second end 1051 of said wedge 105 by said second thrust element 109 in said second direction of translation.

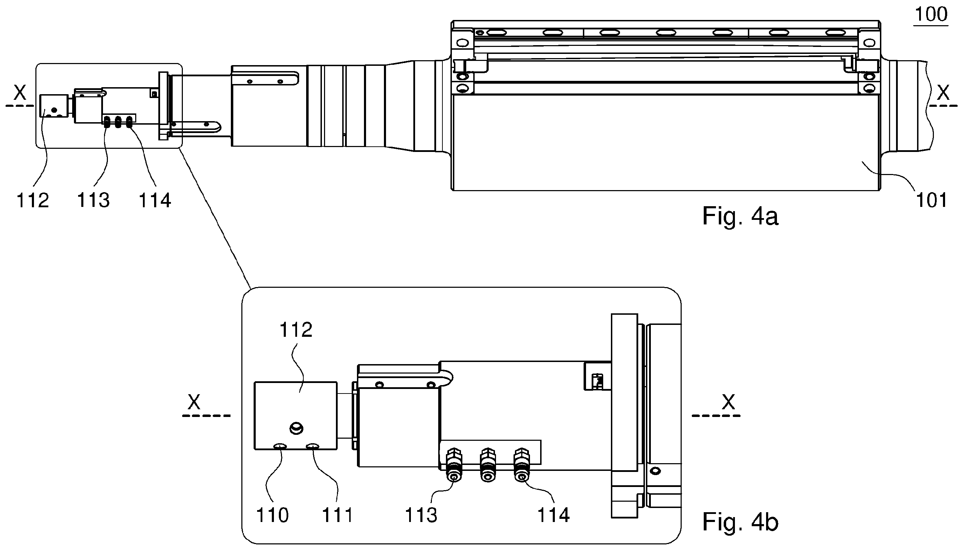

According to an embodiment shown in figures 4a and 4b, said first and second chambers 106, 107 are placed in communication with the outside of said device 100 respectively by means of a first hydraulic duct and a second hydraulic duct obtained at least partially inside said drum 101 (and thus not shown), wherein said first hydraulic duct and said second hydraulic duct lead respectively into a first hydraulic port 110 and a second hydraulic port 111 accessible from the outside of said drum 101 for the introduction of a pressurized hydraulic fluid into said first chamber 106 and said second chamber 107, respectively, and for the discharge of said hydraulic fluid from said first chamber 106 and said second chamber 107, respectively.

According to an embodiment, said first hydraulic port 110 and second hydraulic port 111 are positioned on a rotating joint 112 adapted to support rotating parts of said device 100.

According to a further embodiment, said first and second chambers 106, 107 are placed in communication with the outside of said device also by means of a third hydraulic duct and a fourth hydraulic duct, respectively, obtained at least partially inside said drum 101 (and thus also not shown), wherein said third hydraulic duct and said fourth hydraulic duct respectively lead into a third hydraulic port 113 and a fourth hydraulic port 114 accessible from the outside of said drum 101 for the introduction of a pressurized hydraulic fluid into said first chamber 106 and said second chamber 107, respectively, and for the discharge of said hydraulic fluid from said first chamber 106 and said second chamber 107, respectively. Said third hydraulic port 113 and fourth hydraulic port 114 can be provided either as an alternative to said first hydraulic port 110 and second hydraulic port 111 or in addition to hydraulic ports 110 and 111, wherein in this case, according to the contingent needs, the hydraulic fluid can be fed into chambers 106 and 107 using ports 110 and 111 or alternatively ports 113 and 114.

According to a further variant, said third hydraulic port 113 and fourth hydraulic port 114 are positioned on a rotating part of the hub of said drum101 different from said rotating joint 112.

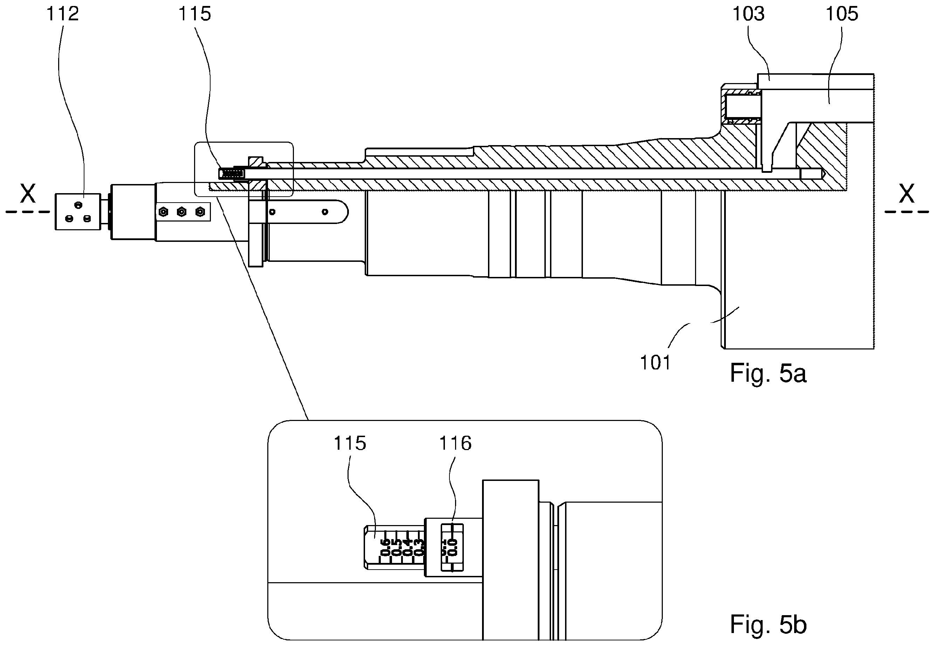

Preferably, the device 100 comprises an indicator of the position in the longitudinal direction of said wedge 105 housed inside the drum 101. In particular, said indicator comprises a bar 115 (Figures 5a-5b) connected, at a first end thereof, to an end 1050 of the wedge 105; the second end of bar 115, opposite to the first end, being graduated and visible from the outside and positioned at reference marks 116 also visible from the outside of the drum 101. Alternatively, electro-mechanical indicators of the position of the wedge 105, e.g., comprising a transducer, can be provided.

The cutting manner of a strip 300 advancing along the direction Z (figure 1c) by means of a shear 200 according to an embodiment of the invention substantially follow those of a shear according to the prior art with opposed rotating drums and can be summarized as follows.

After introducing the end of strip 300 into the gap between the drum 101 and the drum 101' in their open position, the first drum 101 and the second drum 101' are rotated into the open position, and then brought closer to each other (by moving one or both of them along the direction Y) and placed in the closed position, wherein finally the strip 300 is advanced along the direction Z, and wherein the rotation of the drums 101 and 101' and the simultaneous advancing of the strip 300 result in the cutting of the strip 300 into portions the lengths of which depend, among other things, on the advancement speed of the strip 300 synchronized with the peripheral speeds of the knives 103 and 103', respectively, wherein the drums 101 and 101' are brought closer to each other by eccentric means, which allow the cutting to take place before the drums 101 and 101' (and the respective knives 103 and 103') are again moved away from each other as well as from the transiting product 300.

Instead, the adjustment modes of the gap G can be summarized as follows.

The first step involves releasing the blade 103 by translating the locking element 130 towards the outside of the seat 104. Next, the pressurized hydraulic fluid is introduced into the first chamber 106 or the second chamber 107 according to whether the gap G between blades 103 and 103' must be increased or decreased, respectively.

Finally, the locking element 130 is moved back and reinserted into the seat 104, thereby locking the blade 103 in the position previously defined by the translation of the adjustment wedge 105.

Finally, it is worth noting that, according to an embodiment of the device 100 and/or of the respective shear 200, the gap G between said first knife 103 and second knife 103' is adjustable to be equal to or greater than 0.00 mm.

Preferably the gap G is adjustable so that it is equal to or greater than 0.00 mm and less than 2.50 mm.

The excursion of the blade 103 in the TP1-TP2 direction (and thus in the direction Z of advancement of the strip 300) may be, for example, 0.65 mm (said value being non-binding in any case), wherein in a shear 200 comprising the first drum 101 and the second drum 101', both with an adjustment wedge 105 and 105' respectively, the gap G may reach, for example, 1.3 mm (value being non-binding in any case).

Preferably, the gap can be adjusted for thinner thicknesses by means of a shear according to the present invention in which only one of first drum 101 and second drum 101', opposed to each other, is equipped with an adjustment wedge 105 for adjusting the tangential or circumferential position of the blade 103 and thus the gap G between the blades 103 and 103'.

We have thus demonstrated by means of the detailed description of the embodiments shown in the drawings given above that the present invention makes it possible to achieve the desired results and overcome or at least limit the drawbacks found in the prior art.

In particular, the present invention makes available a rotating drum cutting device comprising an innovative solution which:
- can be implemented at low cost and by means of simple, fast operations on shear drums of different types and sizes;
- allows adjustment of the gap between opposed drum blades of a shear in times compatible with production requirements;
- guarantees a precise and long-lasting adjustment of said gap, thus avoiding in-process readjustments of the gap as previously set and adjusted.

Although the present invention is explained above by means of a detailed description of the embodiments thereof shown in the drawings the present invention is obviously not limited to the embodiments described above and shown on the drawings.

The scope of protection of the present invention is thus defined by the claims.

## Claims

1. A drum cutting device (100), e.g., for shears adapted to cut flat metal products (300) advancing along a direction substantially parallel to their longitudinal direction of extension, said device (100) being adapted to cut said flat metal products (300) transversely relative to their direction of advancement, wherein said device (100) comprises at least one drum (101) adapted to be rotated and diametrically delimited by a cylindrical surface (102) and containing a blade or knife (103) partially protruding from said cylindrical surface (102), wherein said blade or knife (103) is partially housed in a seat (104) of said drum (101) and extends longitudinally along a direction substantially parallel to the rotation axis (X) of said drum (101), wherein said device (100) comprises an adjustment wedge (105) also housed at least partially in said seat (104) of said drum (101), wherein the direction of extension of said wedge (105) is substantially parallel to the rotation axis (X) of said drum (101) and the thickness of said wedge (105) transversely to its direction of extension continuously varies along said direction of extension from a minimum thickness to a maximum thickness, wherein said wedge (105) is positioned relative to said blade or knife (103) so that the translation of said wedge parallel to its direction of extension in a first direction of translation results in a peripheral tangential translation of said blade or knife (103) in a first direction of peripheral tangential translation (TP1), while the translation of said wedge in a second direction of translation opposite to the first one results in the peripheral tangential translation of said blade or knife (103) in a second direction of peripheral tangential translation (TP2) opposite to the first one, said device (100) comprising translation means for the translation of said wedge (105) in said two opposite directions of translation, wherein said translation means are arranged on said drum (101),
**characterized in that** said translation means are of the hydraulically actuated type and adapted to subject the opposite ends of said wedge (105) to the hydraulic fluid pressure.

2. A device (100) according to claim 1, **characterized in that** said translation means are arranged inside the drum (101).

3. A device (100) according to claim 1 or 2, **characterized in that** said translation means comprise a first chamber (106) and a second chamber (107) respectively positioned inside the drum (101) at a first end (1050) and a second end (1051) of said adjustment wedge (105), and **in that** the introduction of pressurized hydraulic fluid into said first chamber (106) or in said second chamber (107), by means of a hydraulic circuit comprising said first chamber and second chamber, results in the translation of said wedge (105) in said first direction of translation or in said second direction of translation, respectively.

4. A device (100) according to claim 3, **characterized in that** it comprises a first thrust element (108) and a second thrust element (109) housed respectively in said first chamber (106) and said second chamber (107) so that the introduction of said pressurized hydraulic fluid into said first chamber (106) or said second chamber (107) results respectively in the translation of said first thrust element (108) or said second thrust element (109) and thus respectively in a thrust against said first end (1050) of said wedge (105) by said first thrust element (108) in said first direction of translation or in a thrust against said second end (1051) of said wedge (105) by said second thrust element (109) in said second direction of translation.

5. A device (100) according claims 3 or 4, **characterized in that** said first and second chambers (106, 107) are placed in communication with the outside of said device (100) respectively by means of a first hydraulic duct and a second hydraulic duct obtained at least partially inside said drum (101), and **in that** said first hydraulic duct and said second hydraulic duct lead respectively into a first hydraulic port (110) and a second hydraulic port (111) accessible from the outside of said drum (101) for the introduction of a pressurized hydraulic fluid respectively into said first chamber (106) and said second chamber (107) and for the discharge of said hydraulic fluid respectively from said first chamber (106) and said second chamber (107).

6. A device according to claim 5, **characterized in that** said first hydraulic port (110) and second hydraulic port (111) are positioned on a rotating joint (112) adapted to support rotating parts of said device (100).

7. A device (100) according to one of claims 3 to 6, **characterized in that** said first and second chambers (106, 107) are placed in communication with the outside of said device also respectively by means of a third hydraulic duct and a fourth hydraulic duct obtained at least partially inside said drum (101), and **in that** said third hydraulic duct and said fourth hydraulic duct lead respectively into a third hydraulic port (113) and a fourth hydraulic port (114) accessible from the outside of said drum (101) for the introduction of a pressurized hydraulic fluid respectively into said first chamber (106) and said second chamber (107) and for the discharge of said hydraulic fluid respectively from said first chamber (106) and said second chamber (107).

8. A device (100) according to claim 7, depending on claim 6, **characterized in that** said third hydraulic port (113) and fourth hydraulic port (114) are positioned on a rotating part of the hub of said device (100) different from said rotating joint (112).

9. A device (100) according to any one of claims 1 to 8, **characterized in that** it comprises an indicator of the position of said wedge (105) positioned at least partially within the drum (101).

10. A method for cutting flat metal products (300) advancing along a direction substantially parallel to their direction of longitudinal extension, said method being performed by a device by means of which said flat metal products (300) are cut transversely relative to their direction of advancement, **characterized in that** said device is a device (100) according to any one of claims 1 to 9, thus wherein the rotation of said at least one drum (101) results in the impact of said blade or knife (103) against a said flat metal product (300) and thus ultimately in the cutting of said a flat metal product (300) transversely to its direction of advancement, and **in that** the translation of said wedge (105) in said two opposite directions of translation with consequent peripheral tangential translation of said blade 103 is achieved by means of said hydraulic type translation means arranged aboard said drum (101).

11. A method according to claim 10, **characterized in that** the translation of said wedge (105) in said two opposite directions of translation is achieved by introducing a pressurized hydraulic fluid into said first chamber (106) or into said second chamber (107).

12. A drum shear (200) for cutting flat metal products (300) advancing along a direction substantially parallel to their direction of longitudinal extension, said shear (200) being adapted to cut said products (300) transversely relative to their direction of advancement, said shear (200) comprising a first cutting device (100) and a second cutting device (100') comprising respectively a first drum (101) and a second drum (101'), diametrically delimited respectively by a first cylindrical surface (112) and a second cylindrical surface (112'), and a first blade or knife (103) and a second blade or knife (103') fixed respectively to said first drum (101) and to said second drum (101') and protruding respectively from said first drum (101) and from said second drum (101'), wherein said first device (100) and second device (100') are reciprocally positioned so as to define a space for the passage of said flat metal products (300) during their advancement, wherein with said first device (100) and said second device (100') appropriately positioned, the rotation of said first drum (101) and said second drum (101') results in the cutting of said flat metal product (300) by means of the substantially simultaneous action of said first blade (103) and said second blade (103'); **characterized in that** at least said first device (100) is a device according to any one of claims 1 to 9.

13. A shear (200) according to claim 12, **characterized in that** at least one of said first device (100) and second device (100') is translatable along a direction of translation (Y) perpendicular to the rotation axis (X) of the respective first drum (101) away from or towards said second device (100').

14. A shear (200) according to one of claims 12 and 13, **characterized in that** the gap between said first knife (103) and second knife (103') is adjustable so as to be equal to or greater than 0.00 mm.

## Patentansprüche

1. Trommelschneidvorrichtung (100), z. B. für Scheren, die zum Schneiden von Metallflachprodukten (300) ausgelegt sind, die sich in einer Richtung fortbewegen, die im Wesentlichen parallel zu ihrer Längserstreckungsrichtung verläuft, wobei die Vorrichtung (100) zum Schneiden der Metallflachprodukte (300) quer in Bezug auf ihre Vorschubrichtung ausgelegt ist, wobei die Vorrichtung (100) mindestens eine Trommel (101) umfasst, die zum Drehen ausgelegt ist und diametral von einer zylindrischen Oberfläche (102) begrenzt wird und eine Klinge oder ein Messer (103) enthält, das teilweise aus der zylindrischen Oberfläche (102) hervorsteht, wobei die Klinge oder das Messer (103) teilweise in einem Sitz (104) der Trommel (101) aufgenommen ist und sich in Längsrichtung in einer Richtung erstreckt, die im Wesentlichen parallel zu der Drehachse (X) der Trommel (101) verläuft, wobei die Vorrichtung (100) einen Einstellkeil (105) umfasst, der ebenfalls zumindest teilweise in dem Sitz (104) der Trommel (101) aufgenommen ist, wobei die Erstreckungsrichtung des Keils (105) im Wesentlichen parallel zu der Drehachse (X) der Trommel (101) verläuft und die Dicke des Keils (105) quer zu seiner Erstreckungsrichtung kontinuierlich entlang der Erstreckungsrichtung von einer minimalen Dicke zu einer maximalen Dicke variiert, wobei der Keil (105) in Bezug auf die Klinge oder das Messer (103) so positioniert ist, dass die Verschiebung des Keils parallel zu seiner Erstreckungsrichtung in einer ersten Verschiebungsrichtung zu einer tangentialen Umfangsverschiebung der Klinge oder des Messers (103) in einer ersten Richtung der tangentialen Umfangsverschiebung (TP1) führt, während die Verschiebung des Keils in einer zweiten, der ersten entgegengesetzten Verschiebungsrichtung zu einer tangentialen Umfangsverschiebung der Klinge oder des Messers (103) in einer zweiten, der ersten entgegengesetzten tangentialen Umfangsverschiebung (TP2) führt, wobei die Vorrichtung (100) Verschiebungsmittel zur Verschiebung des Keils (105) in den beiden entgegengesetzten Verschiebungsrichtungen umfasst, wobei die Verschiebungsmittel auf der Trommel (101) angeordnet sind,
**dadurch gekennzeichnet, dass** die Verschiebungsmittel vom hydraulisch betätigten Typ sind und dazu ausgelegt sind, die gegenüberliegenden Enden des Keils (105) dem Hydraulikfluiddruck auszusetzen.

2. Vorrichtung (100) nach Anspruch 1, **dadurch gekennzeichnet, dass** die Verschiebungsmittel innerhalb der Trommel (101) angeordnet sind.

3. Vorrichtung (100) nach Anspruch 1 oder 2, **dadurch gekennzeichnet, dass** die Verschiebungsmittel eine erste Kammer (106) und eine zweite Kammer (107) umfassen, die jeweils innerhalb der Trommel (101) an einem ersten Ende (1050) und einem zweiten Ende (1051) des Einstellkeils (105) positioniert sind, und dadurch, dass die Einleitung von unter Druck stehendem Hydraulikfluid in die erste Kammer (106) oder in die zweite Kammer (107) mittels eines Hydraulikkreislaufs, der die erste Kammer und die zweite Kammer umfasst, zu der Verschiebung des Keils (105) in der ersten Verschiebungsrichtung bzw. in der zweiten Verschiebungsrichtung führt.

4. Vorrichtung (100) nach Anspruch 3, **dadurch gekennzeichnet, dass** sie ein erstes Schubelement (108) und ein zweites Schubelement (109) umfasst, die jeweils in der ersten Kammer (106) bzw. der zweiten Kammer (107) untergebracht sind, sodass die Einleitung des unter Druck stehenden Hydraulikfluids in die erste Kammer (106) oder die zweite Kammer (107) jeweils zu einer Verschiebung des ersten Schubelements (108) bzw. des zweiten Schubelements (109) und somit zu jeweils einem Schub gegen das erste Ende (1050) des Keils (105) durch das erste Schubelement (108) in der ersten Verschiebungsrichtung bzw. zu einem Schub gegen das zweite Ende (1051) des Keils (105) durch das zweite Schubelement (109) in der zweiten Verschiebungsrichtung führt.

5. Vorrichtung (100) nach Anspruch 3 oder 4, **dadurch gekennzeichnet, dass** die erste und die zweite Kammer (106, 107) jeweils mittels eines ersten Hydraulikkanals und eines zweiten Hydraulikkanals, die zumindest teilweise innerhalb der Trommel (101) verlaufen, mit der Außenseite der Vorrichtung (100) in Verbindung stehen, und dadurch, dass der erste Hydraulikkanal und der zweite Hydraulikkanal jeweils in einen ersten Hydraulikanschluss (110) und einen zweiten Hydraulikanschluss (111) führen, die von der Außenseite der Trommel (101) zugänglich sind, um ein unter Druck stehendes Hydraulikfluid jeweils in die erste Kammer (106) bzw. die zweite Kammer (107) einzuleiten und das Hydraulikfluid jeweils aus der ersten Kammer (106) bzw. der zweiten Kammer (107) abzuführen.

6. Vorrichtung nach Anspruch 5, **dadurch gekennzeichnet, dass** der erste Hydraulikanschluss (110) und der zweite Hydraulikanschluss (111) auf einem Drehgelenk (112) positioniert sind, das zur Unterstützung von Drehteilen der Vorrichtung (100) ausgelegt ist.

7. Vorrichtung (100) nach einem der Ansprüche 3 bis 6, **dadurch gekennzeichnet, dass** die erste und die zweite Kammer (106, 107) jeweils auch mittels eines dritten Hydraulikkanals und eines vierten Hydraulikkanals, die zumindest teilweise innerhalb der Trommel (101) verlaufen, mit der Außenseite der Vorrichtung in Verbindung stehen, und dadurch, dass der dritte Hydraulikkanal und der vierte Hydraulikkanal jeweils in einen dritten Hydraulikanschluss (113) und einen vierten Hydraulikanschluss (114) führen, die von der Außenseite der Trommel (101) zugänglich sind, um ein unter Druck stehendes Hydraulikfluid jeweils in die erste Kammer (106) bzw. die zweite Kammer (107) einzuleiten und das Hydraulikfluid jeweils aus der ersten Kammer (106) bzw. der zweiten Kammer (107) abzuführen.

8. Vorrichtung (100) nach Anspruch 7, abhängig von Anspruch 6, **dadurch gekennzeichnet, dass** der dritte Hydraulikanschluss (113) und der vierte Hydraulikanschluss (114) an einem Drehteil der Nabe der Vorrichtung (100) positioniert sind, der sich von dem Drehgelenk (112) unterscheidet.

9. Vorrichtung (100) nach einem der Ansprüche 1 bis 8, **dadurch gekennzeichnet, dass** sie eine Anzeige für die Position des Keils (105) umfasst, der zumindest teilweise innerhalb der Trommel (101) positioniert ist.

10. Verfahren zum Schneiden von Metallflachprodukten (300), die sich in einer Richtung fortbewegen, die im Wesentlichen parallel zu ihrer Längserstreckungsrichtung verläuft, wobei das Verfahren durch eine Vorrichtung durchgeführt wird, mit der die Metallflachprodukte (300) quer in Bezug auf ihre Vorschubrichtung geschnitten werden, **dadurch gekennzeichnet, dass** die Vorrichtung eine Vorrichtung (100) nach einem der Ansprüche 1 bis 9 ist, wobei die Drehung der mindestens einen Trommel (101) zum Auftreffen der Klinge oder des Messers (103) auf ein Metallflachprodukt (300) und somit letztendlich zum Schneiden des Metallflachprodukts (300) quer zu seiner Vorschubrichtung führt, und dadurch, dass die Verschiebung des Keils (105) in die zwei entgegengesetzten Verschiebungsrichtungen mit der daraus resultierenden tangentialen Umfangsverschiebung der Klinge 103 mittels der Verschiebungsmittel vom hydraulischen Typ, die auf der Trommel (101) angeordnet sind, erreicht wird.

11. Verfahren nach Anspruch 10, **dadurch gekennzeichnet, dass** die Verschiebung des Keils (105) in die zwei entgegengesetzten Verschiebungsrichtungen durch Einleiten eines unter Druck stehenden Hydraulikfluids in die erste Kammer (106) oder in die zweite Kammer (107) erreicht wird.

12. Trommelschere (200) zum Schneiden von Metallflachprodukten (300), die sich in einer Richtung fortbewegen, die im Wesentlichen parallel zu ihrer Längserstreckungsrichtung verläuft, wobei die Schere (200) zum Schneiden der Produkte (300) quer in Bezug auf ihre Vorschubrichtung ausgelegt ist, wobei die Schere (200) eine erste Schneidvorrichtung (100) und eine zweite Schneidvorrichtung (100') umfasst, die jeweils eine erste Trommel (101) und eine zweite Trommel (101'), die diametral von einer ersten zylindrischen Oberfläche (112) und einer zweiten zylindrischen Oberfläche (112') begrenzt wird, und eine erste Klinge oder ein erstes Messer (103) und eine zweite Klinge oder ein zweites Messer (103') umfassen, die jeweils an der ersten Trommel (101) bzw. an der zweiten Trommel (101') befestigt sind und jeweils aus der ersten Trommel (101) bzw. aus der zweiten Trommel (101') hervorstehen, wobei die erste Vorrichtung (100) und die zweite Vorrichtung (100') so zueinander positioniert sind, dass sie einen Raum für den Durchgang der Metallflachprodukte (300) während ihres Vorschubs definieren, wobei bei geeigneter Positionierung der ersten Vorrichtung (100) und der zweiten Vorrichtung (100') die Drehung der ersten Trommel (101) und der zweiten Trommel (101') zum Schneiden des Metallflachprodukts (300) mittels der im Wesentlichen gleichzeitigen Wirkung der ersten Klinge (103) und der zweiten Klinge (103') führt; **dadurch gekennzeichnet, dass** mindestens die erste Vorrichtung (100) eine Vorrichtung nach einem der Ansprüche 1 bis 9 ist.

13. Schere (200) nach Anspruch 12, **dadurch gekennzeichnet, dass** mindestens eine der ersten Vorrichtung (100) und der zweiten Vorrichtung (100') entlang einer Verschiebungsrichtung (Y) senkrecht zu der Drehachse (X) der jeweiligen ersten Trommel (101) von der zweiten Vorrichtung (100') weg oder auf diese zu verschiebbar ist.

14. Schere (200) nach einem der Ansprüche 12 und 13, **dadurch gekennzeichnet, dass** der Spalt zwischen dem ersten Messer (103) und dem zweiten Messer (103') so einstellbar ist, dass er gleich oder größer als 0,00 mm ist.

## Revendications

1. Dispositif de coupe à tambour (100), par exemple, pour cisailles adaptée pour couper des produits métalliques plats (300) avançant le long d'une direction sensiblement parallèle à leur direction longitudinale d'extension, ledit dispositif (100) étant adapté pour couper lesdits produits métalliques plats (300) transversalement par rapport à leur direction d'avancement, dans lequel ledit dispositif (100) comprend au moins un tambour (101) adapté pour être tourné et délimité diamétralement par une surface cylindrique (102) et contenant une lame ou un couteau (103) faisant partiellement saillie de ladite surface cylindrique (102), dans lequel ladite lame ou le couteau (103) est partiellement logé dans un siège (104) dudit tambour (101) et s'étend longitudinalement le long d'une direction sensiblement parallèle à l'axe de rotation (X) dudit tambour (101), dans lequel ledit dispositif (100) comprend une cale de réglage (105) également logée au moins partiellement dans ledit siège (104) dudit tambour (101), dans lequel la direction d'extension de ladite cale (105) est sensiblement parallèle à l'axe de rotation (X) dudit tambour (101) et l'épaisseur de ladite cale (105) transversalement à sa direction d'extension varie continuellement le long de ladite direction d'extension d'une épaisseur minimale à une épaisseur maximale, dans lequel ladite cale (105) est positionné par rapport à ladite lame ou couteau (103) de sorte que la translation de ladite cale parallèlement à sa direction d'extension dans une première direction de translation entraîne une translation tangentielle périphérique de ladite lame ou couteau (103) dans une première direction de translation tangentielle périphérique (TP1), tandis que la translation de ladite cale dans une deuxième direction de translation opposée à la première entraîne la translation tangentielle périphérique de ladite lame ou couteau (103) dans une deuxième direction de translation tangentielle périphérique (TP2) opposée à la première, ledit dispositif (100) comprenant des moyens de translation pour la translation de ladite cale (105) dans lesdites deux directions de translation opposées, dans lequel lesdits moyens de translation sont disposés sur ledit tambour (101),
**caractérisé en ce que** lesdits moyens de translation sont du type à actionnement hydraulique et adaptés pour soumettre les extrémités opposées de ladite cale (105) à la pression du fluide hydraulique.

2. Dispositif (100) selon la revendication 1, **caractérisé en ce que** lesdits moyens de translation sont disposés à l'intérieur du tambour (101).

3. Dispositif (100) selon la revendication 1 ou 2, **caractérisé en ce que** lesdits moyens de translation comprennent une première chambre (106) et une deuxième chambre (107) positionnées respectivement à l'intérieur du tambour (101) au niveau d'une première extrémité (1050) et d'une deuxième extrémité (1051) de ladite cale de réglage (105), et **en ce que** l'introduction de fluide hydraulique sous pression dans ladite première chambre (106) ou dans ladite deuxième chambre (107), au moyen d'un circuit hydraulique comprenant ladite première chambre et ladite deuxième chambre, entraîne la translation de ladite cale (105) dans ladite première direction de translation ou dans ladite deuxième direction de translation, respectivement.

4. Dispositif (100) selon la revendication 3, **caractérisé en ce qu'**il comprend un premier élément de poussée (108) et un deuxième élément de poussée (109) logés respectivement dans ladite première chambre (106) et ladite deuxième chambre (107) de sorte que l'introduction dudit fluide hydraulique sous pression dans ladite première chambre (106) ou ladite deuxième chambre (107) entraîne respectivement la translation dudit premier élément de poussée (108) ou dudit deuxième élément de poussée (109) et donc respectivement une poussée contre ladite première extrémité (1050) de ladite cale (105) par ledit premier élément de poussée (108) dans ladite première direction de translation ou une poussée contre ladite deuxième extrémité (1051) de ladite cale (105) par ledit deuxième élément de poussée (109) dans ladite deuxième direction de translation.

5. Dispositif (100) selon les revendications 3 ou 4, **caractérisé en ce que** lesdites première et deuxième chambres (106, 107) sont mises en communication avec l'extérieur dudit dispositif (100) respectivement au moyen d'un premier conduit hydraulique et d'un deuxième conduit hydraulique obtenus au moins partiellement à l'intérieur dudit tambour (101), et **en ce que** ledit premier conduit hydraulique et ledit deuxième conduit hydraulique débouchent respectivement dans un premier orifice hydraulique (110) et un deuxième orifice hydraulique (111) accessibles depuis l'extérieur dudit tambour (101) pour l'introduction d'un fluide hydraulique sous pression respectivement dans ladite première chambre (106) et ladite deuxième chambre (107) et pour l'évacuation dudit fluide hydraulique respectivement depuis ladite première chambre (106) et ladite deuxième chambre (107).

6. Dispositif selon la revendication 5, **caractérisé en ce que** ledit premier orifice hydraulique (110) et ledit deuxième orifice hydraulique (111) sont positionnés sur un joint tournant (112) adapté pour supporter des parties tournantes dudit dispositif (100).

7. Dispositif (100) selon l'une des revendications 3 à 6, **caractérisé en ce que** lesdites première et deuxième chambres (106, 107) sont mises en communication avec l'extérieur dudit dispositif également respectivement au moyen d'un troisième conduit hydraulique et d'un quatrième conduit hydraulique obtenus au moins partiellement à l'intérieur dudit tambour (101), et **en ce que** ledit troisième conduit hydraulique et ledit quatrième conduit hydraulique débouchent respectivement dans un troisième orifice hydraulique (113) et un quatrième orifice hydraulique (114) accessibles depuis l'extérieur dudit tambour (101) pour l'introduction d'un fluide hydraulique sous pression respectivement dans ladite première chambre (106) et ladite deuxième chambre (107) et pour l'évacuation dudit fluide hydraulique respectivement depuis ladite première chambre (106) et ladite deuxième chambre (107).

8. Dispositif (100) selon la revendication 7, dépendant de la revendication 6, **caractérisé en ce que** ledit troisième orifice hydraulique (113) et ledit quatrième orifice hydraulique (114) sont positionnés sur une partie rotative du moyeu dudit dispositif (100) différente dudit joint rotatif (112).

9. Dispositif (100) selon l'une quelconque des revendications 1 à 8, **caractérisé en ce qu'**il comprend un indicateur de la position de ladite cale (105) positionnée au moins partiellement à l'intérieur du tambour (101).

10. Procédé pour couper des produits métalliques plats (300) avançant le long d'une direction sensiblement parallèle à leur direction d'extension longitudinale, ledit procédé étant mis en œuvre par un dispositif au moyen duquel lesdits produits métalliques plats (300) sont coupés transversalement par rapport à leur direction d'avancement, **caractérisé en ce que** ledit dispositif est un dispositif (100) selon l'une quelconque des revendications 1 à 9, ainsi dans lequel la rotation dudit au moins un tambour (101) entraîne l'impact de ladite lame ou couteau (103) contre ledit produit métallique plat (300) et donc finalement la coupe dudit produit métallique plat (300) transversalement à sa direction d'avancement, et **en ce que** la translation de ladite cale (105) dans lesdites deux directions opposées de translation avec translation tangentielle périphérique conséquente de ladite lame 103 est réalisée par ledit moyen de translation de type hydraulique disposé à bord dudit tambour (101).

11. Procédé selon la revendication 10, **caractérisé en ce que** la translation de ladite cale (105) dans lesdites deux directions opposées de translation est réalisée en introduisant un fluide hydraulique sous pression dans ladite première chambre (106) ou dans ladite deuxième chambre (107).

12. Cisaille à tambour (200) pour couper des produits métalliques plats (300) avançant le long d'une direction sensiblement parallèle à leur direction d'extension longitudinale, ladite cisaille (200) étant adaptée pour couper lesdits produits (300) transversalement par rapport à leur direction d'avancement, ladite cisaille (200) comprenant un premier dispositif de coupe (100) et un deuxième dispositif de coupe (100') comprenant respectivement un premier tambour (101) et un deuxième tambour (101'), diamétralement délimités respectivement par une première surface cylindrique (112) et une deuxième surface cylindrique (112'), et une première lame ou couteau (103) et une deuxième lame ou couteau (103') fixés respectivement audit premier tambour (101) et audit deuxième tambour (101') et faisant saillie respectivement dudit premier tambour (101) et dudit deuxième tambour (101'), dans lequel ledit premier dispositif (100) et ledit deuxième dispositif (100') sont positionnés réciproquement de manière à définir un espace pour le passage desdits produits métalliques plats (300) pendant leur avancement, dans lequel, avec ledit premier dispositif (100) et ledit deuxième dispositif (100') positionnés de manière appropriée, la rotation dudit premier tambour (101) et dudit deuxième tambour (101') entraîne la coupe dudit produit métallique plat (300) au moyen de l'action sensiblement simultanée de ladite première lame (103) et de ladite deuxième lame (103') ; **caractérisé en ce qu'**au moins ledit premier dispositif (100) est un dispositif selon l'une quelconque des revendications 1 à 9.

13. Cisaille (200) selon la revendication 12, **caractérisée en ce qu'**au moins l'un dudit premier dispositif (100) et dudit deuxième dispositif (100') est translatable le long d'une direction de translation (Y) perpendiculaire à l'axe de rotation (X) du premier tambour respectif (101) en s'éloignant dudit, ou en se rapprochant audit deuxième dispositif (100').

14. Cisaille (200) selon l'une des revendications 12 et 13, **caractérisée en ce que** l'espace entre ledit premier couteau (103) et ledit deuxième couteau (103') est réglable de manière à être égal ou supérieur à 0,00 mm.
